# EUROPEAN PATENT SPECIFICATION

(11) **EP 1 330 356 B1**
(45) Date of publication and mention of the grant of the patent: **08.06.2005**
(21) Application number: 01964943.3
(22) Date of filing: 05.09.2001
(51) Int. Cl.: B32B 31/00, D06N 5/00, E04D 5/10

(54) **A METHOD FOR THE MANUFACTURE OF A BITUMINOUS COATING SHEET AND SUCH COATING SHEET**
VERFAHREN ZUR HERSTELLUNG EINER FOLIE MIT EINER BITUMINÖSEN SCHICHT UND DERART HERGESTELLTE FOLIE
PROCEDE DE FABRICATION DE FEUILLE DE REVETEMENT BITUMINEUX ET FEUILLE AINSI OBTENUE

(30) Priority: 06.09.2000 DK 200001327
(43) Date of publication of application: 30.07.2003
(73) Proprietor: Icopal A/S, 2730 Herlev (DK)
(72) Inventor: OLSEN, John, Ejrup, DK-2200 Copenhagen N (DK)
(74) Representative: Sundien, Thomas
(86) International application number: PCT/DK2001/000575
(87) International publication number: WO 2002/020267

(56) References cited:
- EP-A2- 0 203 609
- WO-A1-97/29256
- WO-A1-99/43499
- DE-A- 1 619 291

## Description

The invention relates to a method for the manufacture of a bituminous coating sheet of the kind described in the preamble to claim 1. The invention also relates to a coating sheet manufactured by the method.

Danish patent No 150,586 discloses a coating sheet of this kind, wherein an additional bituminous layer that constitutes a welding bitumen is arranged on the layer of rear-face bitumen in accordance with a predetermined pattern. Hereby separate zones are formed, by which the sheet can be secured to the base. Following laying out of the sheet on the base it is possible, in this manner, to provide a number of pressure-equalization channels, whereby it can largely be avoided that, while under sub-atmospheric pressure, humidity and air accumulate in closed-off areas of the coating sheet when the sheet has been laid out on the base. The coating sheet comprises a layer of sand that is, in practice, relatively coarse-grained and that prevents ia that the sheet adheres to the base in the areas between the zones, ie at the bottom of the pressure equalization channels. However, the sand layer significantly increases the weight of the coating sheet, and the sand layer may give rise to delamination.

It is known from WO99/43499 to manufacture a coating sheet wherein a bitumen-impregnated core material with a layer of rear-face bitumen is conveyed across one or more cooling rotating bodies during the manufacturing process, wherein the sheet is, in a final step, provided with a fully coating welding bitumen on the one side. An initial application of a layer of slip material that is melted away during the application of the fully coating welding bitumen makes it possible to avoid that the sheet adheres to the rotating body during advancement of the sheet.

It is the object of the invention to provide a method for the manufacture of an improved bituminous coating sheet with pressure-equalization channels, wherein the coating sheet does not adhere to the rotating bodies in the production equipment and wherein the danger of delamination is minimized. By the invention, the risk of the pressure-equalization channels being blocked by the layer of rear-face bitumen unintentionally causing the sheet to firmly adhere to the base at the bottom of the channel is efficiently avoided. This is obtained as featured in the characterising part of claim 1.

It has thus been found that by applying a layer of the mixture featured in the claim, a favourable barrier for melted rear-face bitumen is obtained when heat energy is applied to activate the zones of welding bitumen during application of the sheet. This energy is usually applied by means of a welding torch simultaneously with the sheet being unrolled. The layer of the stated mixture will thus in general and to a wide extent form the bottom surface of the pressure equalization channels following the welding of the sheet onto the base. There is thus in normal conditions no risk of the sheet also adhering to the base in the area between the zones of welding bitumen, ie at the bottom of the pressure equalization channels, and thereby giving rise to blocking of the channels. The slip material that forms a matrix for the filler material also provides an increased guarantee against delamination of the finished product. Thereby the risk is avoided that eg roof coverings, bridge coatings and the like membrane coatings will, in case of vehement outer impacts, such as influences of wind, be exposed to pulls in the surface that may give rise to a delamination of the bituminous coating sheet. The consequence of such delaminations may be leaks with ensuing damage to the roof construction and/or remaining parts of the building or the plant.

In accordance with the features of claim 2, when 95 % by weight of the filler material consist of grains that are smaller than 0.15 mm, particularly suitable properties are obtained. The filler material being selected in accordance with claim 3 allows the mixture to conveniently be sprayed out by means of conventional nozzles.

Preferably the supplied amount of the mixture and the advancement rate of the core material through the process plant are selected such that the finished product appears with at least 0.3 cm³ of the filler material pr. m² of the sheet.

In accordance with the features of claim 5, the supplied amount of the mixture and the advancement rate of the grain material through the process plant being selected such that the finished product will appear with a maximum of 200 cm³ of the filler material per m² of the sheet, preferably between 1 cm³ and 40 cm³, more preferably between 3 cm³ and 20 cm³ of the filler material pr. m² of the sheet, ensures that the rear-face bitumen layer 4 will, in case of a particular, intensive heating of the underside of the coating sheet, eg. by means of a welding torch, within a relatively short period of time, still melt and appear between the zones of welding bitumen, whereby overlapping joints between two adjoining sheets can be provided transversally to the longitudinal direction.

The mixture of filler material and the slip material that has been dispersed, emulsified or dissolved in a liquid is preferably applied to the coating sheet at such distance from the first rotating body that said liquid will, to a large extent, have evaporated prior to contact with the first rotating body. Hereby a permanently, non-adhesive surface layer consisting of the slip material and the filler material is provided. In that context it is important that, during application of the mixture, the bituminous material has a suitable temperature. Conveniently it is between 100 and 200°C, however, preferably between 120 and 160°. The relatively elevated temperature effects a swift evaporation of the liquid in which the slip material has been dispersed, emulsified or dissolved, which entails an advantageous cooling of the bituminous coating sheet that increases the viscosity of the bitumen material. Optionally additional coolant can be supplied to the surface of the bituminous layer.

By the method a slip material in the form of a polymer is preferably used, eg a thermoplastic polymer that can be acrylic-based and that has been dispersed, emulsified or dissolved in a liquid. PVB (Polyvinyl Butyral) can also be used, to which a softener and a pigment material can be added.

Upon melting, these substances can be dissolved in the layer of welding bitumen, the oils in the bitumen material dissolving the dried film of polymer at a relatively low temperature. Thus, during application of the welding bitumen layer, dissolution of the polymer will occur and due to this, increased delamination strength will result, the welding bitumen layer being caused to be in direct contact with the rear-face bitumen layer.

The method, an apparatus for exercising the method and the coating sheet produced by the method will be explained in further detail in the following with reference to the drawing, wherein
Figure 1 is a schematical cross-sectional view through a coating sheet according to the invention;
Figure 2 shows the one side of the embodiment of the sheet coating shown in Figure 1;
Figure 3 shows the one side of a second embodiment of the coating sheet; and
Figure 4 is a schematical view of a production plant for the manufacture of a coating sheet in accordance with the invention.

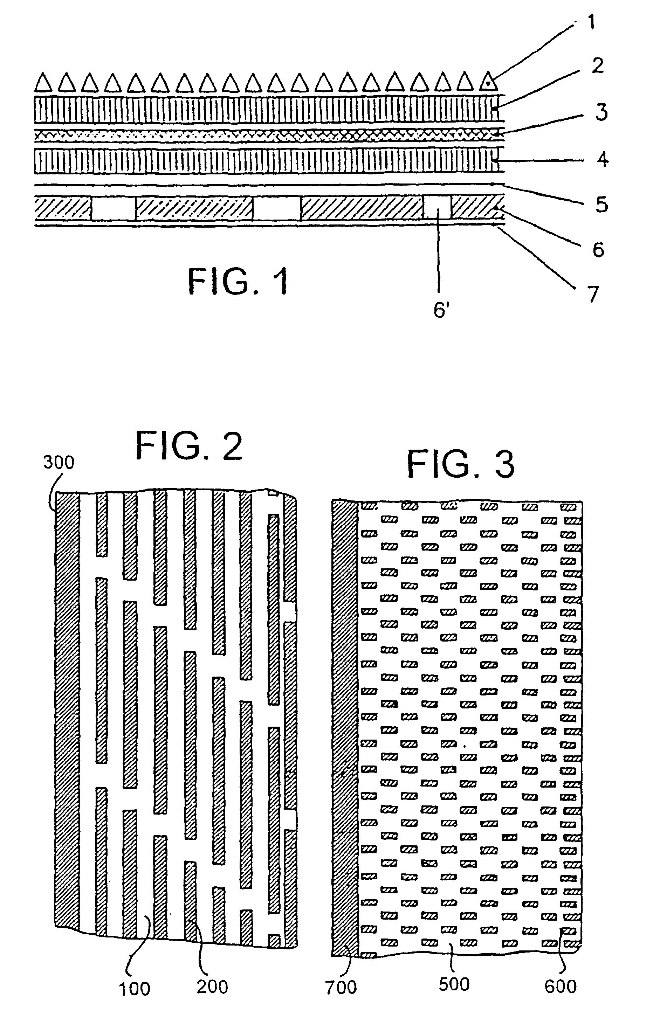

In Figure 1 a cross-sectional view through a coating sheet is shown. The coating sheet is constructed form a core material 3, that may consist eg of a woven synthetic-fibre material, such as polyester fibre. The core material 3 is impregnated with bitumen. On the top face of the core material 3, a bituminous layer 2 is provided on which a layer of grainy protective material has been distributed, eg crushed slate. On the underside of the core material a further bituminous layer 4 is provided, a so-called rear-face bitumen, and underneath this rear-face bitumen 4, is a thin layer 5 consisting of a slip material in the form of a thermoplastic polymer material and a fine-grained filler material. The filler material has a grain size that essentially does not exceed 0.15 mm. However, the maximal grain size may particularly advantageously be comprised between 0,01 and 0,045 mm.

Underneath the layer 5, a partially coating layer 6 of welding bitumen is provided that has been applied in accordance with a pre-selected pattern. Besides, the coating sheet is downwardly provided with a film 7, whereby it is avoided that the welding bitumen layer adheres to other surfaces before the sheet is taken to use.

Figure 2 shows how the layer 6 of welding bitumen has been applied to form elongate zones 200 of welding bitumen are provided, whose longitudinal direction coincides with the longitudinal direction of the material. At its left edge, the shown sheet has a coherent strip 300 of welding bitumen or some other kind of adhesive by which the coating sheet can be connected to an adjoining sheet by overlapping. The strip 300 is applied continuously during advancement of the core material through the process equipment, and the bitumen material that is used to form the strip 300 can optionally have other properties than the material used for forming the zones 200.

Figure 3 shows an alternative coating sheet with a large number of zones 600 of welding bitumen, of which the major part are rectangular and has a longitudinal expanse that extends transversally of the sheet. Additionally the sheet 500 has, at its left edge, an uninterrupted strip 700 of welding bitumen or some other kind of adhesive for use in the securing of the sheet to an adjoining sheet.

Preferably the material in the zones 200, 600 is deposited on the sheet 100, 500 by means of an anti set-off roller.

It will appear from the above disclosures that, between the zones 200, 600, areas or channels 6' will appear that contain no welding bitumen, which means that, during application of the sheets on a base, pressure-equalization channels are provided that are of the same kind as described in Danish patent No. 150,586 B3. Following application of the sheet these channels serve to perform the same functionality as described in said disclosure.

During mounting of the sheet, the sheet is slowly unrolled on top of the base while simultaneously the zones 200, 600 of welding bitumen 6 is, in a conventional manner, heated by means of a welding torch that is conveyed across the surface for a brief duration. In this case the slip material and the filler material form a sealing and effective barrier for the rear-face bitumen material that prevents the rear-face bitumen material from adhering to the base and thereby ensures the integrity of the channels. When the sheet has been applied and a sealing connection is to be established to a subsequent sheet to be applied in extension of the sheet, a continuous heating of the underside of the coating sheet is performed, along the transversal edge of the sheet, whereby the slip material in the layer 5 is decomposed while simultaneously the rear-face bitumen layer 4 melts. Hereby the rear-face bitumen layer 4 is able to diffuse into the areas between the zones 200, 600. In this manner, it is possible to provide a welding of the two adjoining sheets transversally of the longitudinal direction by the welding bitumen layer 6 adhering, jointly with the rear-face bitumen material 4, to the top face of the subsequent sheet.

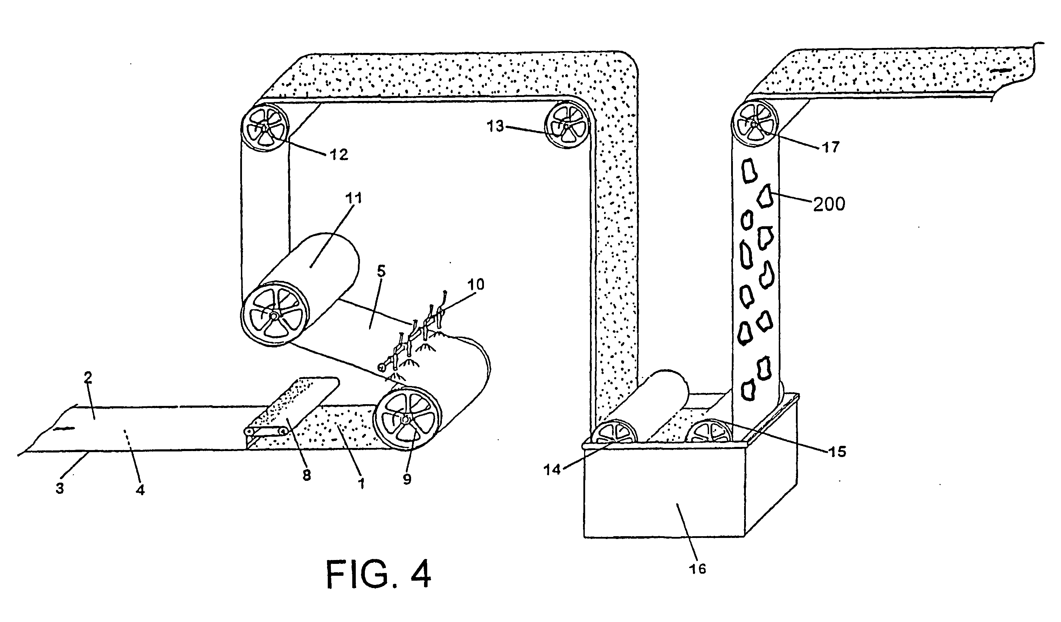

A coating sheet as shown in Figures 1, 2 and 3 may be manufactured, eg in a production plant as shown schematically in Figure 4. For the sake of overview the machine frames, drive means, etc, are not shown. Such measures can readily be implemented by the person skilled in the art. The coating sheet is, in the example shown, conveyed from the left to the right. Starting from the left, the shown part of the production plant receives a sheet of impregnated core material 3, on which a bituminous layer 2 has been applied to the top side, and a bituminous layer 4 has been applied to the underside. The sheet temperature is, at this point in time, 100-200°C, preferably 120-160°C. At a sanding station 8, a grainy sanding layer of crushed slate is distributed on top of the bituminous layer 2 to protect the applied sheet against sunlight. The sheet is subsequently conveyed around a first rotating body 9, where the sanded side of the sheet abuts on this rotating body 9. The sanding 1 thus prevents adhesion of the sheet to the rotating body 9.

Immediately after the rotating body 9 a coating station 10 is provided for a slip material, such as a thermoplastic polymer that has been dispersed, emulsified or dissolved in a liquid, such as water that has been admixed with a filler material in the form of an inorganic, preferably mineral material having a grain size that essentially does not exceed 0.15 mm. The liquid with the filler material is admixed with the filler material in a mixing station and is conveyed to the surface of the bituminous layer 4. The coating station 10 is, in the example shown, constituted by four spray nozzles arranged on a shared suspension device transversally to the sheet, such that the entire width of the sheet is covered by the sprayed-on dispersion/emulsion/solution containing the filler material. The application is preferably effected such that the finished product appears with at least 0.3 cm³ and maximally 200 cm³ of the filler material per m² of the sheet. Hereby the ranges for the thickness of the layer 5 are defined.

At a distance from the coating station 10 the sheet is conveyed around a second rotating body 11 and further around a third and a fourth rotating body 12,13, where the side featuring the slip material 5 abuts on these three rotating bodies 11,12,13. In that connection it is important that the liquid content of the applied dispersion, emulsion or solution has been essentially evaporated prior to contact with the first rotating body 11, and that the temperature of the sheet has also been lowered to a suitable level, where the thermoplastic polymer does not become adhesive. Now the bituminous layer 4 appears with a surface where the polymer material bonds the fine-grained filler material to the surface 4 and simultaneously also bonds the fine-grained particles to each other.

Now, the sheet is conveyed into a vessel 16 by means of two rotating bodies 14,15. In the vessel a layer of welding bitumen 6 is applied to the side provided with the slip material 5 in accordance with a pre-selected pattern for forming the zones 200, 600. Hereby the layer of welding bitumen has a preferred temperature that causes a dissolution and/or adhesion of the thermoplastic polymer in those areas of the sheet where welding bitumen is applied. The remaining areas of the sheet outside the zones 200, 600 will continue to appear with a surface layer 5 that consists of the slip material and the filler material. The subsequently finished coating sheet is provided with an anti-adhesive film layer (not shown) and is, via a further rotating body 17, conveyed to the final packaging and storage.

It is to be added that the filler material can particularly advantageously be a pigment substance, such as iron oxide, whereby it can optionally be made easy for the end user to recognize the zones 200, 600 and thereby direct the welding torch for heating exactly zones 200, 600. The properties of the slip material and the filler material are thus adapted to be such that the rear-face bitumen layer 4 is, in case of a continued heating of the underside of the coating sheet, able to melt and appear in the channels, whereby it is possible to provide overlapping joints between two adjoining zones transversally to their longitudinal direction.

When the rear-face bitumen layer 4 appears in the surface of the coating sheet, the black colour of the bitumen material will be visible between the zones 200, 600 and thereby indicate that the surface in question is adhesive, following which the sheet can be adhered to an adjoining material sheet.

The term 'bitumen' as used herein is intended to designate both bitumen alone and also mixtures consisting primarily of bitumen and having a desired content of additives, such as SBS or other polymer substances, and/or inert fillers, such as powdered lime.

## Claims

1. A method for the manufacture of a bituminous coating sheet for a base,
wherein a bitumen-impregnated core material (3), on which a layer of rear-face bitumen (4) has been applied, is caused to contact one or more rotating bodies during the manufacturing process,
wherein welding bitumen (6) is subsequently applied in zones (200, 600) in order to enable, during application of the sheet on the base, the establishment of pressure equalization channels between the layer of rear-face bitumen (4) and the base,
wherein a mixture is provided of a slip material dispersed, emulsified or dissolved in a liquid;
wherein said mixture is applied to the layer of rear-face bitumen (4) on the side that is to be caused to contact a rotating body;
wherein said liquid is evaporated prior to contact with the rotating body;
and wherein said welding bitumen (6) is applied in zones (200, 600) on the side provided with said mixture,
**characterised in**
said mixture including a filler material having a grain size that essentially does not exceed 0.15 mm.

2. A method according to claim 1, **characterised in that** 95% by weight of the filler material have a grain size of less than 0.15 mm.

3. A method according to claim 2, **characterised in that** 95% by weight of the filler material have a grain size of less than 0.045 mm.

4. A method according to any one of the preceding claims, **characterised in that** the supplied amount of the mixture and the advancement rate of the core material (3) is selected such that the finished product appears with at least 0,3 cm³ of the filler material per m² of the sheet.

5. A method according to any one of the preceding claims, **characterised in that** the supplied amount of the mixture and the advancement rate of the core material (3) is selected to be such that the finished product appears with maximally 200 cm³ of the filler material per m² of the sheet, preferably between 1 cm³ and 40 cm³, most preferably between 3 cm³ and 20 cm³, per m² of the sheet.

6. A method according to any one of the preceding claims, **characterised in that** the mixture is applied in a spraying process.

7. A method according to any one of the preceding claims, **characterised in that** the mixture is applied at such distance from the first rotating body that the liquid is evaporated prior to contact with the first rotating body.

8. A method according to any one of the preceding claims, **characterised in that** the bitumen-impregnated core material (3) and the layer of rear-face bitumen (4) has, when the mixture is applied, a temperature of between 100°C and 200°C, preferably between 120°C and 160°C.

9. A method according to any one of the preceding claims, **characterised in that** the slip material is a polymer material, eg a thermoplastic polymer material.

10. A coating sheet comprising a bitumen-impregnated core material (3) that has been coated with a top-face bitumen (2) and a rear-face bitumen (4) and having an outermost layer of welding bitumen (6) arranged in zones (200, 600) on the one side of the sheet, **characterised in that**, on the layer of rear-face bitumen (4), a layer (5) is present of a mixture of a slip material and a filler material with a grain size that essentially does not exceed 0.15 mm.

11. A coating sheet according to claim 10, **characterised in that** the slip material is a thermoplastic polymer.

12. A coating sheet according to claim 10 or 11, **characterised in that** 95% by weight of the filler material consist of grains that are smaller than 0.15 mm.

13. A coating sheet according to claim 10, 11 or 12, **characterised in that** the amount of filler material constitutes at least 0.3 cm³ and maximally 200 cm³ per m² of the sheet, preferably between 1 cm³ and 40 cm³, more preferably between 3 cm³ and 20 cm³ of the filler material pr. m² of the sheet.

## Patentansprüche

1. Verfahren zur Herstellung einer bitumenhaltigen Beschichtungsbahn für ein Untergrundmaterial,
wobei ein bitumenimprägniertes Kernmaterial (3), auf dem eine Schicht aus rückseitigem Bitumen (4) aufgetragen wurde, veranlasst wird, während des Herstellungsprozesses einen oder mehrere Rotationskörper zu berühren,
wobei Schweißbitumen (6) anschließend in Zonen (200, 600) aufgetragen wird, um während des Aufbringens der Bahn auf dem Untergrundmaterial die Entstehung von Druckausgleichskanälen zwischen der Schicht aus rückseitigem Bitumen (4) und dem Untergrundmaterial zu ermöglichen,
wobei eine Mischung aus einem Gleitmaterial, das in einer Flüssigkeit dispergiert, emulgiert oder aufgelöst wurde, bereitgestellt wird,
wobei die Mischung auf die Schicht aus rückseitigem Bitumen (4) auf der Seite, die veranlasst werden soll, einen Rotationskörper zu berühren, aufgebracht wird,
wobei die Flüssigkeit vor dem Kontakt mit dem Rotationskörper zum Verdampfen gebracht wird,
und wobei der Schweißbitumen (6) in Zonen (200, 600) auf der Seite, die mit der Mischung versehen ist, aufgetragen wird,
**dadurch gekennzeichnet, dass**
die Mischung ein Füllmaterial mit einer Korngröße enthält, die im Wesentlichen nicht über 0,15 mm liegt.

2. Verfahren nach Anspruch 1, **dadurch gekennzeichnet, dass** 95 Gewichts-% des Füllmaterials aus einer Körnung von weniger als 0,15 mm bestehen.

3. Verfahren nach Anspruch 2, **dadurch gekennzeichnet, dass** 95 Gewichts-% des Füllmaterials aus einer Körnung von weniger als 0,045 mm bestehen.

4. Verfahren nach einem der vorangehenden Ansprüche, **dadurch gekennzeichnet, dass** die zugeführte Menge der Mischung und die Vorschubrate des Kernmaterials (3) so gewählt werden, dass das Endprodukt wenigstens 0,3 cm³ des Füllmaterials pro Quadratmeter Bahn aufweist.

5. Verfahren nach einem der vorangehenden Ansprüche, **dadurch gekennzeichnet, dass** die zugeführte Menge der Mischung und die Vorschubrate des Kernmaterials (3) so gewählt werden, dass das Endprodukt maximal 200 cm³ des Füllmaterials pro Quadratmeter Bahn, vorzugsweise zwischen 1 cm³ und 40 cm³, ganz besonders bevorzugt zwischen 3 cm³ und 20 cm³ pro Quadratmeter Bahn, aufweist.

6. Verfahren nach einem der vorangehenden Ansprüche, **dadurch gekennzeichnet, dass** die Mischung in einem Sprühverfahren aufgetragen wird.

7. Verfahren nach einem der vorangehenden Ansprüche, **dadurch gekennzeichnet, dass** die Mischung in einem solchen Abstand von dem ersten Rotationskörper aufgebracht wird, dass die Flüssigkeit vor dem Kontakt mit dem ersten Rotationskörper verdampft.

8. Verfahren nach einem der vorangehenden Ansprüche, **dadurch gekennzeichnet, dass** das bitumenimprägnierte Kernmaterial (3) und die Schicht aus rückseitigem Bitumen (4) beim Auftragen der Mischung eine Temperatur zwischen 100 °C und 200 °C, vorzugsweise zwischen 120 °C und 160 °C, aufweisen.

9. Verfahren nach einem der vorangehenden Ansprüche, **dadurch gekennzeichnet, dass** es sich bei dem Gleitmaterial um ein Polymermaterial, beispielsweise ein thermoplastisches Polymermaterial, handelt.

10. Beschichtungsbahn, die ein bitumenimprägniertes Kernmaterial (3) umfasst, das mit einem oberseitigen Bitumen (2) und einem rückseitigen Bitumen (4) beschichtet ist und eine äußerste Schicht aus Schweißbitumen (6) aufweist, die in Zonen (200, 600) auf der einen Seite der Bahn angeordnet ist, **dadurch gekennzeichnet, dass** auf der Schicht aus rückseitigem Bitumen (4) eine Schicht (5) aus einer Mischung aus einem Gleitmaterial und einem Füllmaterial mit einer Korngröße, die im Wesentlichen nicht über 0,15 mm liegt, vorhanden ist.

11. Beschichtungsbahn nach Anspruch 10, **dadurch gekennzeichnet, dass** es sich bei dem Gleitmaterial um ein thermoplastisches Polymer handelt.

12. Beschichtungsbahn nach Anspruch 10 oder 11, **dadurch gekennzeichnet, dass** 95 Gewichts-% des Füllmaterials aus einer Körnung von weniger als 0,15 mm bestehen.

13. Beschichtungsbahn nach Anspruch 10, 11 oder 12, **dadurch gekennzeichnet, dass** die Menge an Füllmaterial wenigstens 0,3 cm³ und maximal 200 cm³ pro Quadratmeter Bahn, vorzugsweise zwischen 1 cm³ und 40 cm³, besonders bevorzugt zwischen 3 cm³ und 20 cm³ des Füllmaterials pro Quadratmeter Bahn, beträgt.

## Revendications

1. Procédé de fabrication d'une feuille de revêtement bitumineux pour une base,
où un matériau de noyau (3) imprégné de bitume, sur lequel une couche de bitume de face arrière (4) a été appliquée, est amené à venir en contact avec un ou plusieurs corps tournants pendant le procédé de fabrication,
où le bitume de soudage (6) est ensuite appliqué à des zones (200, 600) pour permettre, pendant l'application de la feuille sur la base, l'établissement de canaux d'égalisation de pression entre la couche du bitume de face arrière (4) et la base,
où un mélange est réalisé à partir d'un matériau lubrifiant dispersé, émulsifié ou dissous dans un liquide;
où ledit mélange est appliqué à la couche de bitume de face arrière (4) sur le côté qui est amené à venir en contact avec un corps tournant;
où ledit liquide est amené à s'évaporer avant le contact avec le corps tournant;
et où ledit bitume de soudage (6) est appliqué aux zones (200, 600) au côté pourvu dudit mélange,
**caractérisé en ce que**
ledit mélange comprend un matériau de charge d'une taille de grain qui, pour l'essentiel, ne dépasse pas 0,15 mm.

2. Procédé selon la revendication 1, **caractérisé en ce que** 95 % en poids du matériau de charge ont une taille de grain inférieure à 0,15 mm.

3. Procédé selon la revendication 2, **caractérisé en ce que** 95 % en poids du matériau de charge ont une taille de grain inférieure à 0,045 mm.

4. Procédé selon l'une des revendications précédentes, **caractérisé en ce que** la quantité de mélange fournie et la vitesse d'avancement du matériau de noyau (3) sont sélectionnées de façon que le produit fini apparaît avec au moins 0,3 cm³ du matériau de charge par m² de la feuille.

5. Procédé selon l'une des revendications précédentes, **caractérisé en ce que** la quantité de mélange fournie et la vitesse d'avancement du matériau de noyau (3) sont sélectionnées de façon que le produit fini apparaît avec au maximum 200 cm³ de matériau de charge par m² de la feuille, de préférence entre 1 cm³ et 40 cm³, selon la plus grande préférence entre 3 cm³ et 20 cm³, par m² de la feuille.

6. Procédé selon l'une des revendications précédentes, **caractérisé en ce que** le mélange est appliqué par un processus de pulvérisation.

7. Procédé selon l'une des revendications précédentes, **caractérisé en ce que** le mélange est appliqué à une telle distance du premier corps tournant que le liquide s'évapore avant le contact avec le premier corps tournant.

8. Procédé selon l'une des revendications précédentes, **caractérisé en ce que** le matériau de noyau (3) imprégné de bitume et la couche de bitume de face arrière (4) se trouvent, lorsque le mélange est appliqué, à une température entre 100°C et 200°C, de préférence entre 120°C et 160°C.

9. Procédé selon l'une des revendications précédentes, **caractérisé en ce que** le matériau lubrifiant est un matériau polymère, par exemple un matériau polymère thermoplastique.

10. Feuille de revêtement comprenant un matériau de noyau (3) imprégné de bitume qui a été revêtu d'un bitume de face supérieure (2) et d'un bitume de face arrière (4) et possédant une couche la plus extérieure de bitume de soudage (6) agencée dans les zones (200, 600) sur un côté de la feuille, **caractérisée en ce que**, sur la couche du bitume dé face arrière (4), une couche (5) est présente, constituée d'un mélange de matériau lubrifiant et de matériau de charge avec une taille de grain qui, pour l'essentiel, ne dépasse pas 0,15 mm.

11. Feuille de revêtement selon la revendication 10, **caractérisée en ce que** le matériau lubrifiant est un polymère thermoplastique.

12. Feuille de revêtement selon la revendication 10 ou 11, **caractérisée en ce que** 95 % en poids du matériau de charge sont constitués de grains qui sont plus petits que 0,15 mm.

13. Feuille de revêtement selon les revendications 10, 11 ou 12, **caractérisée en ce que** la quantité de matériau de charge représente au moins 0,3 cm³ et au maximum 200 cm³ par m² de la feuille, de préférence entre 1 cm³ et 40 cm³, selon une plus grande préférence entre 3 cm³ et 20 cm³ du matériau de charge par m² de la feuille.
